# FASCICULE DE BREVET EUROPEEN

(11) **EP 2 091 817 B1**
(45) Date de publication et mention de la délivrance du brevet: **08.12.2010**
(21) Numéro de dépôt: 07858547.8
(22) Date de dépôt: 10.10.2007
(51) Int. Cl.: B64G 1/22

(54) **PROCÉDÉ ET DISPOSITIF DE GONFLAGE D'UNE STRUCTURE GONFLABLE**
VERFAHREN UND VORRICHTUNG ZUM AUFBLASEN EINER AUFBLASBAREN STRUKTUR
METHOD AND DEVICE FOR INFLATING AN INFLATABLE STRUCTURE

(30) Priorité: 15.11.2006 FR 0654904
(43) Date de publication de la demande: 26.08.2009
(73) Titulaire: L'AIR LIQUIDE, Société Anonyme pour l'Etude et l'Exploitation des Procédés Georges Claude, 75007 Paris (FR)
(72) Inventeur: BRAVAIS, Patrick, 38560 Haute Jarrie (FR)
(74) Mandataire: De Cuenca, Emmanuel Jaime
(86) Numéro de dépôt international: PCT/FR2007/052117
(87) Numéro de publication internationale: WO 2008/059146

(56) Documents cités:
- US-A1- 2004 046 085
- MALONE P K ET AL: "LIGHTWEIGHT INFLATABLE SOLAR ARRAY" JOURNAL OF PROPULSION AND POWER, AMERICAN INSTITUTE OF AERONAUTICS AND ASTRONAUTICS. NEW YORK, US, vol. 12, no. 5, 1 septembre 1996 (1996-09-01), pages 866-872, XP000623252 ISSN: 0748-4658
- TAKAHASHI K ET AL: "SIMULATION FOR DEPLOYMENT OF AN INFLATABLE DISK IN ORBIT" JOURNAL OF SPACECRAFT AND ROCKETS, AMERICAN INSTITUTE OF AERONAUTICS AND ASTRONAUTICS,REASTON,VA, US, vol. 37, no. 5, septembre 2000 (2000-09), pages 707-708, XP000967653 ISSN: 0022-4650

## Description

La présente invention concerne un procédé et un dispositif de gonflage d'une structure gonflable.

L'invention concerne notamment un procédé et un dispositif de gonflage d'une structure gonflable de type « Gossamer » pour satellite ou véhicule spatial (lanceur), cf. XP 000 623 252.

Ces structures gonflables peuvent être utilisées par exemple :
- pour former des protections thermiques de satellite ou de lanceur,
- pour former des antennes déployables d'émetteurs/récepteurs,
- pour former des mats de voiles fournissant une traînée permettant de désorbiter un satellite.

Ces structures sont parfois gonflées avec du gaz stocké dans un réservoir sous pression (sous pression pour réduire la masse du réservoir). La présente invention est applicable à tout type de gaz (azote, hélium, argon par exemple), qu'il soit neutre ou non.

L'invention concerne plus particulièrement un procédé de gonflage dune structure gonflable comprenant deux phases :
- une phase de déploiement de la structure gonflable au moyen d'un gaz de remplissage fourni par un réservoir de stockage de gaz sous pression
- une phase de pressurisation pour déformer de façon permanente la structure gonflable au moyen du gaz de remplissage fourni par le réservoir de stockage, le procédé comprenant une étape de contrôle du débit de gaz de remplissage pour éviter l'endommagement de la structure gonflable notamment lors de son déploiement, au moins pendant une partie de la phase de pressurisation, le débit de gaz de remplissage étant porté à une valeur supérieure au débit de gaz de remplissage pendant la phase de déploiement. Un tel procédé est connu du document MALONE PK ET AL : « Lightweight inflatable solar array » Journal of Propulsion and Power, American Institute of Aeronautics and Astronautics. New York, US, vol. 12, n° 5, 1er septembre 1996 (1996-09-01), pages 866-872.

La phase de déploiement de la structure gonflable se déroule à faible pression (quelques dizaines de mbar typiquement dans la structure) et doit être réalisée à faible débit pour ne pas risquer un blocage ou un déchirement de la structure gonflable. La phase de pressurisation est terminée lorsque la pression dans la structure gonflable atteint une valeur telle que la structure a subi une déformation plastique permanente (ou une polymérisation). La structure gonflable peut être constituée de polymère (par exemple « Kapton » ou « Mylar »), matériau présentant un taux de fuite naturel dû à sa porosité (et/ou à l'assemblage des différents panneaux constituant la structure gonflable).

Pour le gonflage d'une telle structure il y a donc contradiction entre, d'une part le débit de déploiement initial qui doit être faible (alors que la pression est élevée dans le réservoir encore rempli) et, d'autre part, le débit de pressurisation final qui doit être relativement élevé (alors que la pression du réservoir est faible car il est quasiment vide s'il n'est pas surdimensionné) afin de surpasser les fuites de la structure gonflable.

Ces contraintes contradictoires ne favorisent pas le remplissage de la structure gonflable.

Dans le cas où le débit D de gaz de remplissage est contrôlé par un orifice unique travaillant en régime sonique, le débit D varie comme la pression P en amont de l'orifice (c'est-à-dire de la pression P dans le réservoir). Donc D= K1.P (avec K1 une constante) si l'on néglige la pression de sortie qui est généralement très faible (<1 bar).

Dans le cas où le débit D de gaz de remplissage est contrôlé par un orifice unique travaillant en régime capillaire, le débit D varie comme le carré de la pression en amont (dest-à-dire de la pression P du réservoir), soit D = K2.P² (avec K2 une constante) si l'on néglige la pression de sortie qui est généralement très faible (<1 bar).

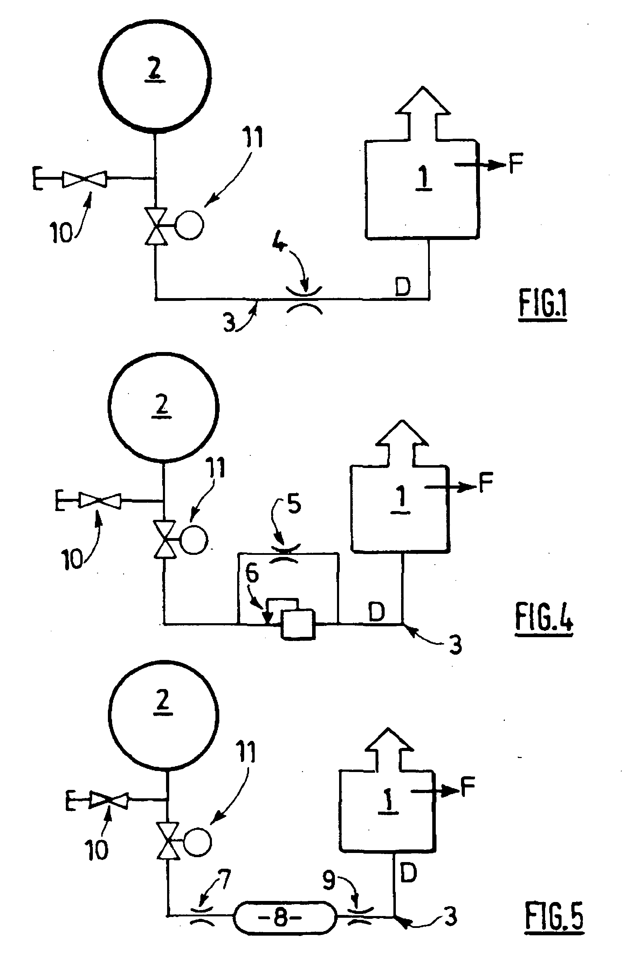

La figure 1 illustre un système de gonflage connu composé d'un réservoir haute pression 2 dans lequel est stocké le gaz sous pression, à une pression typique de 200 à 400 bar. Ce réservoir est généralement en structure composite ou métallique. C'est l'élément le plus lourd du système. Son volume doit donc être le plus réduit possible pour une utilisation sur un satellite ou un lanceur. Le système comprend également d'une conduite munie dune vanne de remplissage 10 généralement à ouverture et fermeture manuelle, qui permet de remplir le réservoir 2. Le réservoir 2 est relié à la structure gonflable 1 par une conduite 3 comprenant en série, d'amont en aval, une vanne 11, par exemple mono-stable (éventuellement bi-stable) permettant de mettre en connexion le réservoir 2 sous pression et la structure 1 à déployer et un orifice 4 calibré permettant de contrôler le débit D de remplissage pour limiter la vitesse de déploiement de la structure 1.

Par ailleurs, le dispositif de gonflage peut être équipé d'un système pour limiter la pression, comme une soupape, un disque de rupture ou une vanne (non représentés).

La structure gonflable 1 peut présenter un taux de fuite F naturel (du fait de sa porosité).

La structure gonflable 1 a généralement une vitesse de déploiement limitée. Dans la mesure où le déploiement se fait à faible pression (quelques dizaines de mbar typiquement), le débit de fuite F sortant de la structure 1 est alors généralement négligeable par rapport au débit de gonflage rentrant dans la structure 1. A la vitesse de déploiement de la structure 1 correspond un débit de massique de gaz initial. Ce débit massique initial et la pression du réservoir 2 (ainsi que les caractéristiques du gaz) déterminent la taille de l'orifice 4.

Cet orifice 4 peut avoir une caractéristique débit/pression d'un orifice sonique si le diamètre est suffisamment important (plusieurs dizaines de microns pour autoriser un perçage laser ou avec un foret) ou dun orifice capillaire si l'orifice est constitué de métal fritté ou d'un tube capillaire.

Après déploiement de la structure 1 à faible pression, le volume de la structure reste constant et la pression dans la structure gonflable augmente. La pression dans la structure doit atteindre une certaine limite, typiquement autour de 1 bar, pour que la déformation plastique de la structure lui permette ensuite de conserver sa forme sans ajout continuel "de gaz (pour compenser les fuites naturelles notamment).

Au cours de cette phase de pressurisation la pression P du réservoir 2 diminue et donc le débit D rentrant dans la structure 1 diminue. Par ailleurs, la pression de la structure 1 augmente et donc le débit de fuite F sortant de la structure 1 augmente.

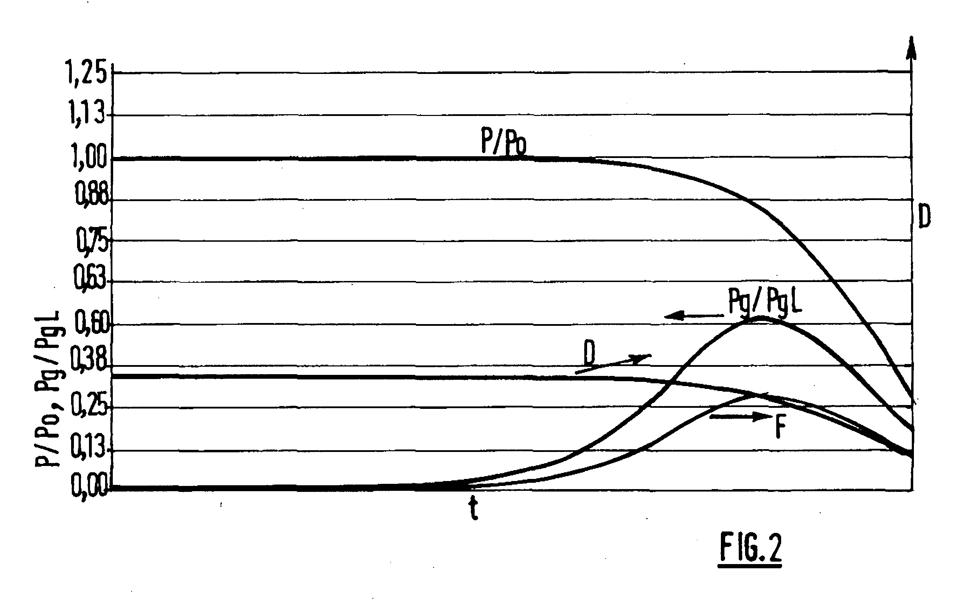

Dans certains cas, lorsque fuites de la structure 1 gonflable sont non négligeables par rapport au débit D de gonflage (limité par la vitesse de déploiement), le débit de gonflage D devient inférieur au débit de fuite F, alors même que la pression du réservoir 2 est élevée (cf. figure 2). La figure 2 illustre les variations en fonction du temps (échelle logarithmique en abscisse) :
- du ratio de la pression instantanée P dans le réservoir 2 sur la pression initiale Po du réservoir 2 (P/Po),
- du débit D de remplissage via l'orifice 4,
- du ratio de la pression instantanée Pg dans la structure gonflable 1 sur la pression limite PgL de la structure gonflable 1 (Pg/PgL), et
- du débit de fuite F de la structure 1 (porosité) au cours dun remplissage assuré par un dispositif selon la figure 1.

La figure 2 représente également le seuil S de pression nécessaire pour atteindre la déformation définitive dans la structure gonflable 1. Ce seuil correspond à Pg=PgL, soit Pg/PgL=1.

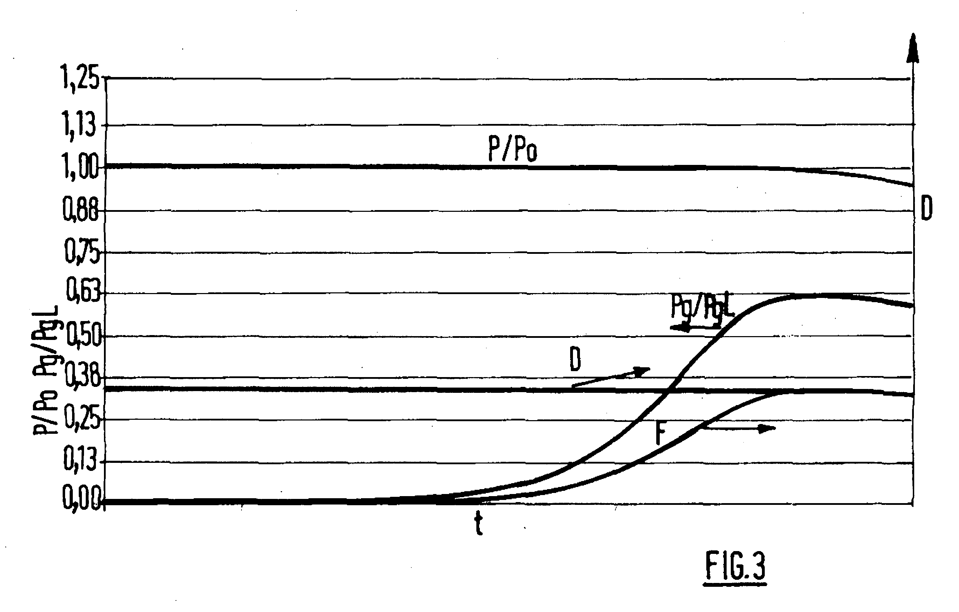

Comme visible sur la figure 3 où les éléments identiques sont désignés par les même références, même en augmentant considérablement le volume du réservoir 2 pour que sa pression P reste constante le plus longtemps au cours du temps, il difficile voir impossible d'obtenir un débit de gonflage suffisant pour compenser un débit de fuite important à la pression limite à atteindre (seuil S).

Un but de la présente invention est de pallier tout ou partie des inconvénients de l'art antérieur relevés ci-dessus.

A cette fin, le procédé selon l'invention, est défini par la partie caractérisante de la revendication 1.

Par ailleurs, des modes de réalisation de l'invention peuvent comporter l'une ou plusieurs des caractéristiques suivantes :
- l'étape de contrôle du débit (D) de gaz de remplissage est réalisée automatiquement par voie passive en fonction des caractéristiques de pression instantanée dans le réservoir de stockage,
- au moins pendant une partie du transit de gaz de remplissage depuis le réservoir de stockage vers la structure gonflable, le débit (D) de gaz de remplissage est contrôlé pour varier de façon inversement proportionnelle à la pression (P) instantanée dans le réservoir de stockage,
- au moins pendant une partie du transit de gaz de remplissage depuis le réservoir vers la structure gonflable, le débit (D) de gaz de remplissage est contrôlé pour varier selon une loi du type D = c1.Pⁿ avec n étant un nombre inférieur à zéro, c1 étant une constante et P étant la valeur de la pression instantanée dans le réservoir de stockage,
- au moins pendant une partie de la phase de mise sous pression, le débit (D) de gaz de remplissage est fixé à une valeur supérieure au débit de fuite (F) de gaz s'échappant hors de la structure gonflable du fait de sa porosité.

Un autre but de l'invention est de proposer un dispositif de gonflage palliant tout ou partie des inconvénients de l'art antérieur relevés ci-dessus.

A cette fin, le dispositif selon l'invention comprend, une structure gonflable qui est défini par la revendication 8, l'élément de commutation étant de type passif et sensible à la pression dans le réservoir de stockage.

Par ailleurs, des modes de réalisation de l'invention peuvent comporter l'une ou plusieurs des caractéristiques suivantes :
- le système de contrôle du débit (D) comprend, montés en série dans une conduite du circuit entre le réservoir de stockage de gaz sous pression et la structure gonflable, un premier orifice calibré, un réservoir tampon ou plénum et un second orifice calibré, le débit de passage au travers du premier orifice calibré étant supérieur au débit de passage au travers du second orifice calibré,
- le premier orifice calibré est du type sonique préférentiellement et le second orifice calibré du type capillaire préférentiellement,
- le système de contrôle du débit (D) comprend, montés en parallèle dans une conduite du circuit, un orifice calibré et un organe déverseur, l'organe déverseur étant conformé pour laisser transiter le gaz à un débit différent et de préférence supérieur au débit de l'orifice calibré et uniquement lorsque la pression régnant en amont du déverseur est inférieure à une valeur déterminée.

D'autres particularités et avantages apparaîtront à la lecture de la description ci-après, faite en référence aux figures dans lesquelles :
- la figure 1 représente une vue schématique illustrant la structure et le fonctionnement d'un dispositif de gonflage d'une structure gonflable selon l'art antérieur,
- la figure 2 représente les courbes de variation de divers paramètres de gonflage du dispositif de la figure 1 dans un premier exemple d'utilisation dans lequel la porosité de la structure gonflable est relativement importante,
- la figure 3 représente les courbes de variation de divers paramètres de gonflage du dispositif de la figure 1 dans un second exemple d'utilisation dans lequel la porosité de la structure gonflable est relativement importante et pour une taille de réservoir supérieure à celle de l'exemple de la figure 2,
- les figures 4 et 5 représentent des vues schématiques illustrant la structure et le fonctionnement d'un dispositif de gonflage d'une structure gonflable selon respectivement deux modes de réalisation de l'invention,
- la figure 6 représente les courbes de variation de divers paramètres de gonflage du dispositif de la figure 5 (échelle logarithmique pour le temps t en abscisse).

Par soucis de concision, dans les figures 4 à 6, les éléments et paramètres identiques à ceux décrits ci-dessus sont désignés par les mêmes références numériques et ne sont pas décrits une seconde fois.

Dans l'exemple de réalisation de la figure 4, la régulation de débit de gaz de remplissage utilise un déverseur 6 et un orifice 5 calibré installés en parallèle. Le déverseur 6 est un organe, qui contrairement à une soupape, se ferme lorsque la pression en amont est supérieure à un seuil prédéterminé (correspondant par exemple au tarage d'un ressort). Le déverseur 6 s'ouvre et devient passant à un débit déterminé lorsque la pression amont est inférieure à ce seuil (ou en fonction d'un différentiel de pression entre les extrémités amont et aval du déverseur).

Lorsque le gaz dans le réservoir 2 est à une pression relativement haute, le déverseur 6 est fermé, et l'orifice 5 est dimensionné pour laisser passer un débit de gaz pour déployer la structure 1 à la vitesse désirée. Le débit et donc la vitesse de déploiement sont sensiblement constants puisque cette phase consomme peu de gaz (la pression du stockage du réservoir 2 évolue très peu, typiquement de l'ordre de 1 à 3%). Lorsque la pression P dans le réservoir atteint une valeur plus basse déterminée, typiquement 80 à 90% de la pression initiale Po, le déverseur 6 s'ouvre et permet également le passage de gaz de remplissage pour mettre sous pression la structure gonflable 1 rapidement (de préférence avec un débit bien supérieur au débit de fuite F par porosité de la structure 1).

Selon le mode de réalisation de la figure 5, la régulation de débit est assurée par un système comprenant un plénum 8 et deux orifices 7, 9 calibrés. Un premier orifice 7 en amont du plénum qui est de préférence sonique, et un second orifice 9 en aval du plénum qui est de préférence capillaire.

Ces solutions présentent l'avantage de découpler complètement le débit de déploiement de la structure 1 et le débit de gonflage de cette dernière puisque ces deux débits de remplissage différents sont obtenus par deux organes passifs différents et indépendants.

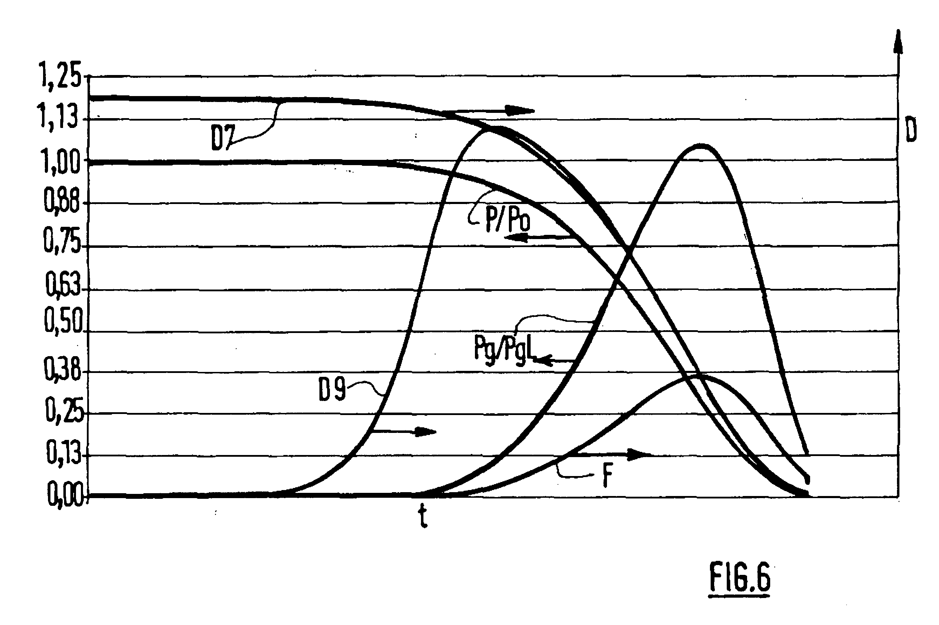

En se référant aux figures 5 et 6, en début de remplissage la pression du plénum 8 est faible (par exemple vide spatial) et le débit D9 de gaz via le second orifice 9 est bien inférieur au débit D7 de gaz via le premier orifice 7. De cette façon, la structure gonflable est déployée à une faible vitesse (cf. figure 6).

Compte tenu de la différence de débits des deux orifices 7, 9, le plénum 8 se remplit et la pression dans le plénum 8 augmente. Il y a ainsi une phase pendant laquelle le débit massique via le premier orifice 7 diminue comme la pression du réservoir 2 et le débit via le second orifice 9 augmente comme la pression du plénum au carré. Le débit de gonflage de la structure 2 (débit via le second orifice 9) augmente donc significativement ce qui permet d'avoir une mise en pression et un débit de gonflage supérieur au débit de fuite de la structure le cas échéant (cf. figure 6 où est représenté également le débit D9 via le second orifice 9.

L'invention présente de nombreux avantages. En particulier, en réduisant le volume du plénum 8 on augmente la pression maximale atteinte dans le plénum 8. Le volume du plénum 8 peut être optimisé de manière à ce que le ratio de la pression dans le réservoir 2 sur la pression dans le plénum 8 reste supérieur à deux (écoulement sonique) tant que la pression limite dans la structure gonflable 2 n'a pas été atteinte.

Le premier orifice 7 est préférentiellement de type sonique. Ainsi, le débit rentrant dans le plénum 8 décroît comme la pression P du réservoir 2.

Le second orifice 9 est préférentiellement de type capillaire. Ainsi, le débit sortant du plénum 8 (c'est-à-dire rentrant dans la structure) évolue comme la pression du plénum 8 au carré et donc augmente significativement entre la phase de déploiement de la structure 1 (pour laquelle la pression du plénum 8 est encore relativement faible) et la phase de pressurisation de la structure 1 (pour laquelle la pression du plénum 8 devient relativement importante).

On constate donc que, tout en étant de structure simple et peut coûteuse, l'invention permet d'améliorer le remplissage de structure gonflables au moyen d'un système passif.

## Revendications

1. Procédé de gonflage d'une structure gonflable de type « Gossamer » comprenant deux phases : une phase de déploiement de la structure gonflable au moyen d'un gaz de remplissage fourni par un réservoir (2) de stockage de gaz sous pression, une phase de pressurisation pour déformer de façon permanente la structure gonflable (1) au moyen du gaz de remplissage fourni par le réservoir (2) de stockage, le procédé comprenant une étape de contrôle du débit (D) de gaz de remplissage pour éviter l'endommagement de la structure gonflable (1) notamment lors de son déploiement, au moins pendant une partie de la phase de pressurisation, le débit (D) de gaz de remplissage étant porté à une valeur supérieure au débit de gaz de remplissage pendant la phase de déploiement, les phases de déploiement et de pressurisation de la structure gonflable (1) étant réalisées par équilibrage de pression entre le réservoir (2) de stockage de gaz sous pression et la structure gonflable (1), **caractérisé en ce que** la transition entre les phases de déploiement et de pressurisation est réalisée par des moyens de commutation passifs.

2. Procédé selon la revendication 1, **caractérisé en ce que** la transition entre les phases de déploiement et de pressurisation est réalisée en fonction de la pression en temps réel dans le réservoir de stockage (2).

3. Procédé selon l'une quelconque des revendications 1 ou 2, **caractérisé en ce que** la transition entre les phases de déploiement et de pressurisation est réalisée automatiquement en fonction du différentiel de pression entre l'amont et l'aval d'un organe de commutation disposé dans un conduit reliant le réservoir (2) de stockage à la structure gonflable.

4. Procédé selon l'une quelconque des revendications 1 à 3, **caractérisé en ce que** l'étape de contrôle du débit (D) de gaz de remplissage est réalisée automatiquement par voie passive en fonction des caractéristiques de pression instantanée dans le réservoir de stockage (2).

5. Procédé selon l'une quelconque des revendications précédentes, **caractérisé en ce qu'**au moins pendant une partie du transit de gaz de remplissage depuis le réservoir (2) vers la structure gonflable (1), le débit (D) de gaz de remplissage est contrôlé pour varier de façon inversement proportionnelle à la pression (P) instantanée dans le réservoir (2) de stockage.

6. Procédé selon l'une quelconque des revendications précédentes, **caractérisé en ce qu'**au moins pendant une partie du transit de gaz de remplissage depuis le réservoir (2) vers la structure gonflable (1), le débit (D) de gaz de remplissage est contrôlé pour varier selon une loi du type D = c1.Pⁿ avec n étant un nombre inférieur à zéro, c1 étant une constante et P étant la valeur de la pression instantanée dans le réservoir (2) de stockage.

7. Procédé selon l'une quelconque des revendications précédentes, **caractérisé en ce qu'**au moins pendant une partie de la phase de mise sous pression, le débit (D) de gaz de remplissage est fixé à une valeur supérieure au débit de fuite (F) de gaz s'échappant hors de la structure gonflable (1) du fait de sa porosité.

8. Dispositif de gonflage d'une structure gonflable (1) de type « Gossamer » comprenant un réservoir (2) de stockage de gaz sous pression, un circuit (3) apte à faire transiter le gaz par équilibrage de pression depuis le réservoir (2) de stockage vers la structure gonflable (1), un système (5, 6 ; 7 à 9) de contrôle du débit (D) de gaz de remplissage transitant dans le circuit (3), le système (5, 6 ; 7 à 9) de contrôle du débit (D) comprenant au moins deux organes (5, 6 ; 7 , 9) de restriction du débit à des valeurs respectives différentes et un élément de commutation conformé pour commuter le système (5, 6 ; 7 à 9) de contrôle de débit entre au moins deux états dans lesquels le gaz de remplissage emprunte respectivement des organes (5, 6 ; 7, 9) de restriction du débit différents ou des combinaisons différentes de ces organes (5, 6 ; 7, 9) de restriction du débit, **caractérisé en ce que** l'élément de commutation est de type passif et sensible à la pression dans le réservoir (2) de stockage.

9. Dispositif selon la revendication 8, **caractérisé en ce que** le système (5, 6 ; 7 à 9) de contrôle du débit (D) comprend, montés en série dans une conduite du circuit (3) entre le réservoir (2) de stockage de gaz sous pression et la structure gonflable (1), un premier orifice calibré (7), un réservoir tampon ou plénum (8) et un second orifice calibré (9), le débit de passage au travers du premier orifice calibré (7) étant supérieur au débit de passage au travers du second orifice calibré (9).

10. Dispositif selon la revendication 8, **caractérisé en ce que** le premier orifice calibré (7) est du type sonique et le second orifice calibré (9) du type capillaire.

11. Dispositif selon la revendication 8 ou 9, **caractérisé en ce que** le système (5, 6 ; 7 à 9) de contrôle du débit (D) comprend, montés en parallèle dans une conduite du circuit (3), un orifice calibré (5) et un organe déverseur (6), l'organe déverseur (6) étant conformé pour laisser transiter le gaz à un débit différent et de préférence supérieur au débit de l'orifice calibré (5) et uniquement lorsque la pression régnant en amont du déverseur (6) est inférieure à une valeur déterminée.

## Claims

1. Method of inflating a gossamer inflatable structure, comprising two phases: a deployment phase, from which the inflatable structure is deployed by means of a filling gas delivered by a pressurized-gas storage tank (2), and a pressurization phase, for permanently deforming the inflatable structure (1) by means of the filling gas delivered by the storage tank (2), the method including a step of controlling the filling gas flow rate (D) so as to prevent the inflatable structure (1) being damaged, especially on deploying it, at least during part of the pressurization phase, the filling gas flow rate (D) being brought to a value above the filling gas flow rate during the deployment phase, the phases of deploying and pressurizing the inflatable structure (1) being carried out by pressure balancing between the pressurized-gas storage tank (2) and the inflatable structure (1), **characterized in that** the transition between the deployment phase and the pressurization phase is carried out by passive switching means.

2. Method according to Claim 1, **characterized in that** the transition between the deployment phase and the pressurization phase is carried out according to the pressure in real time in the storage tank (2).

3. Method according to either of Claims 1 and 2, **characterized in that** the transition between the deployment phase and the pressurization phase is carried out automatically according to the pressure differential between the upstream side and the downstream side of a switching member placed in a line connecting the storage tank (2) to the inflatable structure.

4. Method according to any one of Claims 1 to 3, **characterized in that** the step of controlling the filling gas flow rate (D) is carried out automatically by passive means according to the instantaneous pressure characteristics in the storage tank (2).

5. Method according to any one of the preceding claims, **characterized in that** the filling gas flow rate (D) is controlled, at least during part of the transfer of filling gas from the tank (2) into the inflatable structure (1), so as to vary it in inverse proportion to the instantaneous pressure (P) in the storage tank (2).

6. Method according to any one of the preceding claims, **characterized in that** the filling gas flow rate (D) is controlled, at least during part of the transfer of filling gas from the tank (2) into the inflatable structure (1), so as to vary it according to a law of the type D = c₁ × Pⁿ, with n being a number less than zero, c1 being a constant and P being the instantaneous pressure in the storage tank (2).

7. Method according to any one of the preceding claims, **characterized in that** the filling gas flow rate (D) is set, at least during part of the pressurization phase, to a value above the leakage rate (F) of gas escaping out of the inflatable structure (1) because of its porosity.

8. Device for inflating a gossamer inflatable structure (1), comprising a pressurized gas storage tank (2), a circuit (3) capable of transferring the gas from the storage tank (2) into the inflatable structure (1) by pressure balancing, a flow control system (5, 6; 7 to 9) for controlling the flow rate (D) of filling gas flowing in the circuit (3), the flow control system (5, 6; 7 to 9) comprising at least two flow restrictors (5, 6; 7, 9), for restricting the flow rate to different respective values, and a switching element designed to switch the flow control system (5, 6; 7 to 9) between at least two states in which the filling gas passes respectively through different flow restrictors (5, 6; 7, 9) or different combinations of these flow restrictors (5, 6; 7, 9), **characterized in that** the switching element is of the passive type and is sensitive to the pressure in the storage tank (2).

9. Method according to Claim 8, **characterized in that** the flow control system (5, 6; 7 to 9) for controlling the flow rate (D) comprises, mounted in series in a line of the circuit (3) between the pressurized gas storage tank (2) and the inflatable structure (1), a first calibrated orifice plate (7), a buffer tank or plenum (8) and a second calibrated orifice plate (9), the rate of flow through the first calibrated orifice plate (7) being greater than the rate of flow through the second calibrated orifice plate (9).

10. Device according to Claim 8, **characterized in that** the first calibrated orifice plate (7) is of the sonic type and the second calibrated orifice plate (9) is of the capillary type.

11. Device according to Claim 8 or 9, **characterized in that** the flow control system (5, 6; 7 to 9) comprises, mounted in parallel in a line of the circuit (3), a calibrated orifice plate (5) and an overflow (6), the overflow (6) being designed to let the gas be transferred with a flow rate different from and preferably greater than the flow rate through the calibrated orifice plate (5) and only when the pressure upstream of the overflow (6) is below a predetermined value.

## Patentansprüche

1. Verfahren zum Aufblasen einer aufblasbaren Struktur des "Gossamer"-Typs, das zwei Phasen enthält: eine Phase des Entfaltens der aufblasbaren Struktur mittels eines Füllgases, das von einem Vorratsbehälter (2) für mit Druck beaufschlagtes Gas geliefert wird, und eine Druckbeaufschlagungsphase, um die aufblasbare Struktur (1) mittels des von dem Vorratsbehälter (2) gelieferten Füllgases dauerhaft zu verformen, wobei das Verfahren einen Schritt des Steuerns des Füllgas-Durchflusses (D) enthält, um eine Beschädigung der aufblasbaren Struktur (1) insbesondere bei ihrer Entfaltung wenigstens während eines Teils der Druckbeaufschlagungsphase zu verhindern, wobei der Füllgas-Durchfluss (D) auf einem Wert oberhalb des Füllgas-Durchflusses während der Entfaltungsphase gehalten wird und wobei die Phasen des Entfaltens und der Druckbeaufschlagung der aufblasbaren Struktur (1) durch Druckausgleich zwischen dem Vorratsbehälter (2) für mit Druck beaufschlagtes Gas und der aufblasbaren Struktur (1) ausgeführt werden, **dadurch gekennzeichnet, dass** der Übergang zwischen den Phasen des Entfaltens und der Druckbeaufschlagung durch passive Umschaltmittel ausgeführt wird.

2. Verfahren nach Anspruch 1, **dadurch gekennzeichnet, dass** der Übergang zwischen den Phasen des Entfaltens und der Druckbeaufschlagung als Echtzeit-Funktion des Drucks im Vorratsbehälter (2) ausgeführt wird.

3. Verfahren nach einem der Ansprüche 1 oder 2, **dadurch gekennzeichnet, dass** der Übergang zwischen den Phasen des Entfaltens und der Druckbeaufschlagung automatisch als Funktion der Druckdifferenz zwischen der Eingangsseite und der Ausgangsseite eines Umschaltorgans, das in einer den Vorratsbehälter (2) mit der aufblasbaren Struktur verbindenden Leitung angeordnet ist, ausgeführt wird.

4. Verfahren nach einem der Ansprüche 1 bis 3, **dadurch gekennzeichnet, dass** der Schritt des Steuerns des Füllgas-Durchflusses (D) automatisch auf passivem Weg als Funktion der Eigenschaften des momentanen Drucks in dem Vorratsbehälter (2) ausgeführt wird.

5. Verfahren nach einem der vorhergehenden Ansprüche, **dadurch gekennzeichnet, dass** wenigstens während eines Teils des Übergangs des Füllgases von dem Vorratsbehälter (2) in die aufblasbare Struktur (1) der Füllgas-Durchfluss (D) so gesteuert wird, dass er umgekehrt proportional zum momentanen Druck (P) im Vorratsbehälter (2) geändert wird.

6. Verfahren nach einem der vorhergehenden Ansprüche, **dadurch gekennzeichnet, dass** wenigstens während eines Teils des Übergangs des Füllgases von dem Vorratsbehälter (2) in die aufblasbare Struktur (1) der Füllgas-Durchfluss (D) so gesteuert wird, dass er sich gemäß einem Gesetz des Typs D = c1 · Pⁿ verändert, wobei n eine Zahl kleiner als null ist, c1 eine Konstante ist und P der Wert des momentanen Drucks in dem Vorratsbehälter (2) ist.

7. Verfahren nach einem der vorhergehenden Ansprüche, **dadurch gekennzeichnet, dass** wenigstens während eines Teils der Druckbeaufschlagungsphase der Füllgas-Durchfluss (D) auf einen Wert oberhalb des Leckdurchflusses (F) des Gases, das aus der aufblasbaren Struktur (1) aufgrund seiner Porosität entweicht, festgelegt wird.

8. Vorrichtung zum Aufblasen einer aufblasbaren Struktur (1) des "Gossamer"-Typs, mit einem Vorratsbehälter (2) für mit Druck beaufschlagtes Gas, einem Kreis (3), der den Übergang des Gases durch Druckausgleich von dem Vorratsbehälter (2) in die aufblasbare Struktur (1) bewerkstelligen kann, und einem System (5, 6; 7 bis 9) für die Steuerung des Durchflusses (D) des Füllgases, das sich in den Kreis (3) bewegt, wobei das System (5, 6; 7 bis 9) für die Steuerung des Durchflusses (D) wenigstens zwei Organe (5, 6; 7, 9) für die Begrenzung des Durchflusses auf jeweils unterschiedliche Werte sowie ein Umschaltelement, um das System (5, 6; 7 bis 9) für die Steuerung des Durchflusses zwischen wenigstens zwei Zuständen umzuschalten, in denen das Füllgas verschiedene Organe (5, 6; 7, 9) für die Begrenzung des Durchflusses oder verschiedene Kombinationen dieser Organe (5, 6; 7, 9) für die Begrenzung des Durchflusses passiert, enthält, **dadurch gekennzeichnet, dass** das Umschaltelement vom passiven Typ ist und auf den Druck im Vorratsbehälter (2) anspricht.

9. Vorrichtung nach Anspruch 8, **dadurch gekennzeichnet, dass** das System (5, 6; 7 bis 9) für die Steuerung des Durchflusses (D) in einer Leitung des Kreises (3) zwischen dem Vorratsbehälter (2) für mit Druck beaufschlagtes Gas und der aufblasbaren Struktur (1) in einer Serienschaltung eine erste kalibrierte Blende (7), einen Pufferbehälter oder ein Plenum (8) und eine zweite kalibrierte Blende (9) enthält, wobei der Durchfluss durch die erste kalibrierte Blende (7) größer ist als der Durchfluss durch die zweite kalibrierte Blende (9).

10. Vorrichtung nach Anspruch 8, **dadurch gekennzeichnet, dass** die erste kalibrierte Blende (7) vom akustischen Typ ist und die zweite kalibrierte Blende (9) vom kapillaren Typ ist.

11. Vorrichtung nach Anspruch 8 oder 9, **dadurch gekennzeichnet, dass** das System (5, 6; 7 bis 9) für die Steuerung des Durchflusses (D) in einer Leitung des Kreises (3) in einer Parallelschaltung eine kalibrierte Blende (5) und ein Einlauforgan (6) enthält, wobei das Einlauforgan (6) dazu ausgebildet ist, das Gas mit einem unterschiedlichen Durchfluss, der vorzugsweise höher als der Durchfluss der kalibrierten Blende (5) ist, und ausschließlich dann, wenn der auf der Einlassseite des Einlaufs (6) herrschende Druck kleiner als ein bestimmter Wert ist, durchzulassen.
